# DEMANDE DE BREVET EUROPEEN

(11) **EP 0 995 977 A1**
(43) Date de publication de la demande: **26.04.2000**
(21) Numéro de dépôt: 99402597.1
(22) Date de dépôt: 20.10.1999
(51) Int. Cl.: G01F 15/075

(54) **Dispositif de mesure de la consommation de fluide d'un utilisateur sur une durée donnée**

(30) Priorité: 22.10.1998 FR 9813265
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Charrier, Christophe, 92600 Asnières sur Seine (FR); Dulphy Vigor, Véronique, 60611 Chicago, Illinois (US); Willemot, Antoine, 91190 Gif sur Yvette (FR); Dilly, Patrick, 78000 Versailles (FR); Vigor, Xavier, 60611 Chicago, Illinois (US); Jouvaud, Dominique, 75015 Paris (FR)
(74) Mandataire: Le Moenner, Gabriel

(57) **Abrégé**

L'invention concerne un dispositif de mesure de la consommation de fluide d'un utilisateur sur une durée de mesure donnée comportant un compteur volumétrique (26) relié à une unité centrale de traitement d'informations (28). Celle-ci est adaptée pour effectuer un ensemble de relevés à des intervalles successifs de ladite durée de mesure, pour comparer chaque relevé à une valeur de référence correspondant à un seul de consommation nominal prédéterminé et ainsi en déduire la quantité consommée sur ladite durée de mesure correspondant à une consommation faite avec un débit supérieur au seuil de consommation nominal.

## Description

La présente invention concerne un dispositif de mesure de la consommation de fluide d'un utilisateur sur une durée de mesure donnée, du type comportant un compteur disposé en amont du point de connexion de l'utilisateur, lequel compteur est adapté pour mesurer une quantité de fluide délivrée à l'utilisateur pendant un laps de temps considéré, et, reliée audit compteur, une unité de traitement d'informations comportant des moyens d'évaluation de la quantité de fluide mesurée par ledit compteur.

Pour satisfaire les besoins d'un utilisateur de fluide, par exemple des utilisateurs d'azote gazeux sous pression, il est connu de prévoir chez l'utilisateur une unité de production d'azote.

Cette unité est dimensionnée pour fournir un débit nominal demandé par l'utilisateur. Ce débit nominal est déterminé à partir d'une estimation prévisionnelle des consommations instantanées. Toutefois, au cours du temps, la demande en gaz de l'utilisateur peut varier et notamment présenter des pics de consommation.

Afin de satisfaire continuellement les besoins de l'utilisateur, l'unité de production comporte classiquement une machine de production de gaz associée en parallèle à un réservoir de stockage de gaz. Ainsi, lors de pointes de consommation, la machine seule ne pouvant fournir le gaz demandé, du gaz est puisé dans le réservoir de stockage.

Le réservoir de stockage est généralement ravitaillé périodiquement, par exemple par l'intermédiaire d'un camion citerne.

Les prix de revient du gaz produit par la machine de production et du gaz issu du réservoir de stockage sont différents. Aussi, il est admis que le fournisseur de gaz, propriétaire de l'installation, facture à l'utilisateur, à des taux différents, le gaz issu de la machine de production et du réservoir de stockage, le taux appliqué pour le gaz issu du réservoir étant supérieur au taux appliqué pour le gaz produit par la machine.

A cet effet, l'installation de production de gaz comporte deux compteurs volumétriques disposés l'un immédiatement en sortie de la machine de production de gaz et l'autre disposé immédiatement en sortie du réservoir de stockage.

Ces compteurs sont relevés périodiquement, par exemple tous les mois, et les quantités de gaz relevées par chaque compteur sont valorisées au taux correspondant.

Le dispositif de mesure de la consommation n'est pas pleinement satisfaisant, puisqu'il suppose que la machine de production de gaz est susceptible d'assurer de manière continue un débit stable égal au débit nominal convenu avec l'utilisateur.

Ainsi dans la pratique, si la performance de la machine est inférieure à la performance nominale, une forte quantité de gaz est issue du réservoir de stockage, ce qui se traduit par un accroissement du coût pour l'utilisateur.

En revanche, si la machine a des performances supérieures aux performances requises, les recours au réservoir de stockage sont rares, de sorte que le débit ne reflète pas la surconsommation opérée par l'utilisateur.

De même, en cas d'une succession de fluctuations importantes du débit réel de la machine autour du débit nominal, la quantité de gaz extraite du réservoir de stockage ne correspond nullement aux phases de dépassement du débit nominal par l'utilisateur. Ainsi, les volumes mesurés par les capteurs ne correspondent pas à la prestation réellement fournie à l'utilisa-teur.

L'invention a pour but de fournir un dispositif de mesure de la consommation de fluide, ne présentant pas les inconvénients mentionnés ci-dessus et qui permet, de manière simple, de déterminer avec précision les quantités consommées par l'utilisateur et correspondant à des débits supérieurs à un seuil nominal déterminé.

A cet effet, l'invention a pour objet un dispositif de mesure de consommation de fluide par un utilisateur sur une durée donnée, du type précité, caractérisé en ce que ladite unité de traitement d'informations comporte :
- des moyens de mémorisation d'au moins un seuil nominal de consommation ;
- des moyens de relevé du compteur au cours de ladite durée donnée à des instants successifs pour déterminer la quantité de fluide délivrée à l'utilisateur sur chaque intervalle défini entre deux instants successifs ;
- des moyens de comparaison, sur chaque intervalle, des quantités mesurées par rapport à au moins une valeur de référence, représentative dudit seuil nominal sur l'intervalle considéré ;
- des moyens de sommation sur l'ensemble des intervalles couvrant ladite durée de mesure, des excédents de chaque quantité mesurée au-delà de la ou de chaque valeur de référence pour l'intervalle considéré ; et
- des moyens de sommation sur l'ensemble des intervalles couvrant ladite durée de mesure, de la part de chaque quantité mesurée inférieure à la ou chaque valeur de référence pour l'intervalle considéré.

Suivant des modes particuliers de réalisation, le dispositif de mesure comporte l'une ou plusieurs des caractéristiques suivantes :
- la durée de chaque intervalle est inférieure à la période moyenne des fluctuations de consommation de l'utilisateur au cours du temps autour du seuil nominal de consommation ;
- les durées de tous les intervalles de ladite durée de mesure sont égales ; et
- le compteur est adapté pour mesurer le volume de fluide consommé, et la ou chaque valeur de référence sur chaque intervalle est égale au volume du fluide devant être consommé pendant l'intervalle considéré pour une consommation correspondant au ou à chaque seuil nominal de consommation.
L'invention a également pour objet l'application d'un tel dispositif à la fourniture d'un gaz, en particulier un gaz ou un mélange gazeux séparé de l'air.

L'invention sera mieux comprise à la lecture de la description qui va suivre, donnée uniquement à titre d'exemple, et faite en se référant aux dessins sur lesquels :
- la figure 1 est une vue schématique d'un dispositif de mesure selon l'invention mis en place dans une installation de fourniture d'azote ;
- la figure 2 est un graphe montrant l'évolution des quantités mesurées par le dispositif de mesure de la figure 1 ; et
- la figure 3 est un organigramme du programme mis en oeuvre dans le dispositif de mesure.

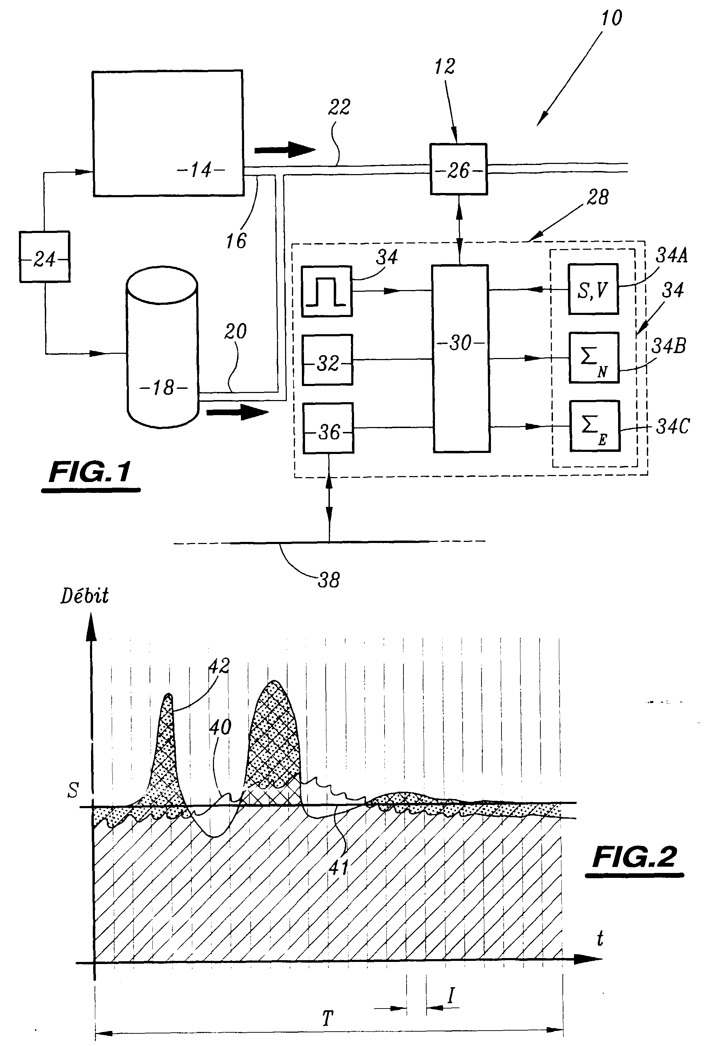

L'installation représentée à titre d'exemple sur la figure 1 comporte une unité 10 de fourniture d'azote en sortie de laquelle est disposé un dispositif 12 de mesure de consommation selon l'invention.

L'installation 10 comporte une machine de production 14 destinée à produire de l'azote gazeux à partir d'air atmosphérique. L'azote produit par la machine 14 est acheminé par une conduite 16 vers l'utilisateur.

Un réservoir de stockage 18 est monté en parallèle sur la machine de production 14. Ce réservoir est relié par une conduite 20 à l'utilisateur. Les conduites 20 et 16 convergent en une conduite unique de distribution 22 alimentant l'utilisateur.

La machine de production 14 et le réservoir 18 sont commandés par une unité de pilotage 24 adaptée pour provoquer le prélèvement d'azote dans le réservoir 18, lorsque la demande de l'utilisateur est importante et que la machine de production 14 n'est pas susceptible de répondre seule à cette demande.

Le dispositif de mesure de la consommation 12 comporte un compteur volumétrique 26 monté sur la conduite de distribution 22. Le compteur 26 est relié par une liaison de transfert de données bidirectionnelles à une unité de traitement d'informations 28.

Cette dernière comporte un calculateur 30 relié à une mémoire 32 dans laquelle est stocké un programme de pilotage de l'unité de traitement d'informations 28. En outre, l'unité de traitement 28 comporte une horloge 34 permettant le cadencement des opérations effectuées par le calculateur 30 sous la commande du programme.

Le calculateur 30 est relié à une mémoire 34 comportant une zone mémoire 34A dans laquelle est stocké un seuil nominal de consommation S.

Ce seuil nominal de consommation S correspond aux quantités contractuelles à livrer convenues entre l'utilisateur et le fournisseur de gaz. Il correspond aux prévisions de consommation de l'utilisateur au cours du temps. Ce seuil est par exemple égal au débit prévisionnel. Celui-ci est par exemple de 1000 m³/h dans le cas de la fourniture d'azote.

La zone mémoire 34B est destinée au stockage de la quantité Σ_{N}, correspondant au total des quantités de gaz consommées par l'utilisateur en deçà des conditions nominales correspond au seuil nominal S.

Une dernière zone mémoire 34C est destinée au stockage de la quantité Σ_{N}, correspondant au total des quantités de gaz consommées en excès par l'utilisateur par rapport aux conditions nominales correspondant au seuil nominal S. Ainsi, la quantité Σ_{N} correspond aux quantités consommées au-delà des quantités fixées par le seuil nominal S.

Enfin, l'unité de traitement d'information 28 comporte des moyens d'émission/réception 36 adaptés pour assurer la transmission de données entre l'unité de traitement d'informations 28 et un site éloigné par l'intermédiaire d'un réseau de transmission de données 38 tel que le réseau téléphonique.

La mesure effectuée par le dispositif s'effectue sur une durée T donnée. Cette durée de mesure est divisée en un ensemble d'intervalles de temps successifs notés I.

La durée de chaque intervalle I est avantageusement inférieure à la période moyenne des fluctuations de consommation de l'utilisateur au cours du temps, autour du seuil nominal de consommation S.

Une valeur de référence V est calculée par le calculateur 30 et stockée dans la zone mémoire 34A. Cette valeur de référence V est égale à la quantité de gaz théorique devant être mesurée par le compteur 26 pendant un intervalle de temps I déterminé pour un débit correspondant au seuil nominal S sur l'intervalle I considéré.

Si le seuil nominal S est le débit gazeux, la valeur V est égale au débit nominal S multiplié par la durée de l'intervalle I. Tous les intervalles I sont avantageusement pris égaux.

La courbe représentée à la figure 2 correspond à l'évolution des débits sur la durée de mesure donnée T. La durée de mesure est par exemple une période de facturation, égale à 30 jours.

La durée de mesure T est subdivisée en un ensemble d'intervalles I de durée égale à une minute.

La figure 2 représente plus particulièrement l'évolution au cours du temps des débits produits par la machine 14 et consommé par l'utilisateur.

Le débit produit par la machine 14 est désigné par la référence 40. Il fluctue sensiblement autour du seuil nominal de consommation S représenté par la droite 41.

Le débit consommé en fonction du temps par l'utilisateur est représenté par la courbe 42. Dans l'exemple décrit, on constate deux pics de consommation suivis chacun d'une phase de moindre consommation se situant en deçà du seuil nominal S.

Lors des pics de consommation, l'azote fourni provient au moins partiellement du réservoir 18 comme indiqué par les zones marquées de points sur la figure 2 et correspondant aux surfaces comprises entre les courbes 40 et 42.

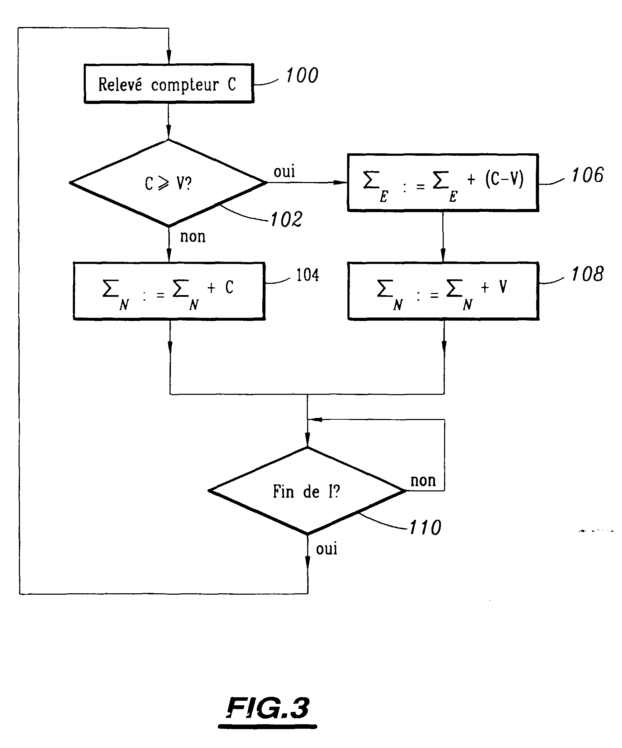

Un organigramme du programme mis en oeuvre par l'unité de traitement d'informations 28 est représenté sur la figure 3.

Au début de chaque durée de mesure T, les quantités Σ_{N} et Σ_{E} sont mises à zéro.

Pendant toute la durée de mesure T, à l'instant initial d'un intervalle I, le calculateur 30 relève à l'étape 100, la quantité C consommée par l'utilisateur lors de l'intervalle considéré. La quantité C est déterminée par la différence entre les valeurs relevées par le compteur 26 aux deux instants extrêmes de l'intervalle I considéré.

Des informations communiquées par l'horloge 34 au calculateur 30, sous la commande du programme stocké dans la mémoire 32, permet d'effectuer ces relevés périodiques, des quantités mesurées par le compteur 26. Ces quantités correspondent aux volumes de gaz ayant transité au travers du compteur.

A l'étape 102, le calculateur vérifie si la quantité C est supérieure au seuil de référence V.

Si tel n'est pas le cas, le calculateur 30 détermine à l'étape 104 la nouvelle valeur de Σ_{N}, en ajoutant à la valeur précédente la quantité C.

Ce cas correspond à un intervalle I, où la quantité de gaz consommé est inférieure à la valeur de référence, c'est-à-dire à un intervalle I pendant lequel le débit consommé par l'utilisateur est inférieur au seuil nominal convenu S.

Au contraire, si la quantité C est supérieure à la valeur de référence V, ce qui correspond au cas où !e débit pendant l'intervalle considéré est supérieure au seuil nominal S, le calculateur 30 détermine à l'étape 106 la nouvelle valeur de Σ_{E} en augmentant celle-ci de la différence entre la quantité consommée pendant l'intervalle I et la valeur de référence V.

En outre, à l'étape 108, le total Σ_{N} est remis à jour en étant augmenté de la valeur de référence V.

A l'issue de l'étape 104 ou des étapes 106 et 108, le programme attend à l'étape 110 la fin de l'intervalle I.

Lorsque cet intervalle s'achève, la durée de l'intervalle I étant mesuré par l'intermédiaire de l'horloge 34, un nouveau relevé du compteur 26 est effectué à l'étape 100.

On comprend qu'avec un tel dispositif, il est possible de déterminer avec précision chacun des intervalles au cours desquels le débit consommé par l'utilisateur est supérieur au seuil nominal S et de comptabiliser pendant ces intervalles la quantité consommée au-delà de la valeur de référence V correspondant au seuil nominal S.

Au contraire, pendant les phases où le débit consommé est au deçà au seuil nominal S, les quantités réellement consommées sont comptabilisées dans Σ_{E}.

Comme représenté sur la figure 2, les quantités Σₙ, Σ_{E} sont indépendantes tant des quantités produites par la machine 14 que des quantités issues du réservoir 18. En effet, la quantité Σ_{N} correspond à la surface hachurée définie au-dessous des courbes 40 ou 41, alors que la quantité Σ_{E} correspond à la surface quadrillée comprise entre les courbes 42 et 41.

Ainsi, ces valeurs ne dépendent que du seuil nominal S et notamment de la valeur de référence V correspondante. En revanche, les quantités relevées ne dépendent pas du dimensionnement de la machine 14 ou de son rendement.

Il est ainsi possible d'utiliser les quantités Σ_{E} et Σ_{N} pour calculer le prix réel de la prestation fournie en fonction du seuil nominal S prédéterminé.

En variante, plusieurs seuils nominaux S de consommation sont mémorisés et, sur chaque intervalle I, la quantité mesurée est comparée à plusieurs valeurs de référence V, représentatives des différents seuils. Lesmoyens de sommation 30, 34C effectuent alors la somme des excédents de chaque quantité mesurée par rapport à chaque valeur de référence V.

De même, la somme des parts de chaque quantité mesurée inférieure à chaque valeur de référence V est réalisée par les moyens de sommation 30 et 34B.

Ainsi, il est possible de déterminer un prix de vente du fluide fourni tenant compte de plusieurs valeurs de seuil.

## Revendications

1. Dispositif (12) de mesure de la consommation de fluide d'un utilisateur sur une durée de mesure donnée (T), du type comportant un compteur (26) disposé en amont du point de connexion de l'utilisateur, lequel compteur (26) est adapté pour mesurer une quantité de fluide délivrée à l'utilisateur pendant un laps de temps considéré, et, reliée audit compteur (26), une unité (28) de traitement d'informations comportant des moyens (30) d'évaluation de la quantité de fluide mesurée par ledit compteur, caractérisé en ce que ladite unité de traitement d'informations (28) comporte :
- des moyens de mémorisation d'au moins un seuil nominal (S) de consommation ;
- des moyens de relevé du compteur au cours de ladite durée donnée (T) à des instants successifs pour déterminer la quantité de fluide délivrée à l'utilisateur sur chaque intervalle (I) défini entre deux instants successifs ;
- des moyens de comparaison, sur chaque intervalle (I), des quantités mesurées par rapport à au moins une valeur de référence (V), représentative du ou de chaque seuil nominal (S) sur l'intervalle considéré (I) ;
- des moyens (30, 34C) de sommation sur l'ensemble des intervalles (I) couvrant ladite durée de mesure (T), des excédents de chaque quantité mesurée au-delà de la ou de chaque valeur de référence (V) pour l'intervalle considéré (I) ; et
- des moyens (30, 34B) de sommation sur l'ensemble des intervalles (I) couvrant ladite durée de mesure (T), de la part de chaque quantité mesurée inférieure à la ou chaque valeur de référence (V) pour l'intervalle considéré (I).

2. Dispositif de mesure selon la revendication 1, caractérisé en ce que la durée de chaque intervalle (I) est inférieure à la période moyenne des fluctuations de consommation de l'utilisateur au cours du temps autour du seuil nominal de consommation.

3. Dispositif de mesure selon la revendication 1 ou 2, caractérisé en ce que les durées de tous les intervalles (I) de ladite durée de mesure (T) sont égales.

4. Dispositif de mesure selon l'une quelconque des revendications précédentes, caractérisé en ce que le compteur (26) est adapté pour mesurer le volume de fluide consommé, et la ou chaque valeur de référence (V) sur chaque intervalle (I) est égale au volume du fluide devant être consommé pendant l'intervalle (I) considéré pour une consommation correspondant au ou à chaque seuil nominal de consommation (S).

5. Application d'un dispositif selon l'une des revendications précédentes à la fourniture d'un gaz.

6. Application selon la revendication 5, caractérisée en ce que le gaz est un gaz de l'air.
